# EUROPÄISCHE PATENTANMELDUNG

(11) **EP 3 421 416 A1**
(43) Veröffentlichungstag der Anmeldung: **02.01.2019**
(21) Anmeldenummer: 17178676.7
(22) Anmeldetag: 29.06.2017
(51) Int. Cl.: C01B 7/04

(54) **PHOTOKATALYTISCHE OXIDATION VON CHLORWASSERSTOFF MIT KOHLENSTOFFMONOXID**

(71) Anmelder: Covestro Deutschland AG, 51373 Leverkusen (DE)
(72) Erfinder: Rittermeier, Andre, 44809 Bochum (DE); Burbach, Thomas, 50181 Bedburg (DE)
(74) Vertreter: Levpat

(57) **Zusammenfassung**

Es wird ein Verfahren zur Herstellung von Chlor durch photokatalytische Oxidation von gasförmigem Chlorwasserstoff mit Kohlenstoffdioxid als Oxidationsmittel beschrieben bei dem die Reaktion auf der Oberfläche eines Photokatalysators durch Einwirkung von UV-Strahlung in einem selektiven Energiebereich gestartet wird.

## Beschreibung

Die Erfindung betrifft ein Verfahren zur Herstellung von Chlor durch photokatalytische Oxidation von gasförmigem Chlorwasserstoff mit Kohlenstoffdioxid (CO₂) als Oxidationsmittel. Die zum Stand der Technik vergleichsweise niedrigen Temperaturen in dem neuen Verfahren erlauben aufgrund der Lage des thermodynamischen Gleichgewichts das Erreichen sehr hoher HCl-Umsetzungsgrade und damit eine effizientere Aufarbeitung der Reaktionsprodukte.

Bei der Herstellung vieler organischer Verbindungen sowie bei der Herstellung von Rohstoffen für die Produktion von Polymeren wird in der Produktionskette Chlor (Cl₂) als Reaktionspartner eingesetzt. Bei der Umwandlung der chlorhaltigen Zwischenprodukte in chlorfreie Endprodukte entsteht häufig Chlorwasserstoff (HCl) als Nebenprodukt. Ein Beispiel für diese Reaktionskette ist die Herstellung von Polyurethanen über Phosgen als Zwischenprodukt. Die weitere Nutzung des anfallenden Chlorwasserstoffs kann z.B. durch Vermarktung der wässrigen Lösung (Salzsäure) oder durch Verwendung des Chlorwasserstoffs bei Synthesen anderer chemischer Produkte erfolgen. Die anfallenden Mengen an Chlorwasserstoff können jedoch nicht immer vollständig am Ort seines Anfalls genutzt werden. Ein Transport von Chlorwasserstoff oder Salzsäure über weite Wege ist unwirtschaftlich. Die Entsorgung des Chlorwasserstoffs durch Neutralisation mit Lauge ist technisch möglich, aus wirtschaftlicher und ökologischer Sicht jedoch ebenfalls unattraktiv. Aus ökonomischen und ökologischen Gründen ist daher eine Produktion mit einem geschlossenen Chlorkreislauf wünschenswert. Dieser sollte das Recycling von Chlorwasserstoff zu Chlor beinhalten. Wegen der essentiellen Rolle der Chlorchemie in der chemischen Industrie und wegen der großen anfallenden Mengen an Chlorwasserstoff in der Größenordnung von ≥ 10⁹ kg/a allein in Deutschland besitzen Technologien zum HCl-Recycling eine enorme wirtschaftliche Bedeutung.

HCl-Recyclingverfahren sind Stand der Technik (vgl. Ullmann Enzyklopädie der technischen Chemie, Weinheim, 4. Auflage 1975, Bd. 9, S. 357 ff. oder Winnacker-Küchler: Chemische Technik, Prozesse und Produkte, Wiley-VCH Verlag, 5. Auflage 2005, Bd. 3, S. 512 ff.): Dazu zählen insbesondere die Elektrolyse von Salzsäure sowie die Oxidation von Chlorwasserstoff. Das von Deacon 1868 entwickelte Verfahren der katalytischen Chlorwasserstoffoxidation mit Sauerstoff in einer exothermen Gleichgewichtsreaktion stand am Anfang der technischen Chlorchemie:

4 HCl + O₂ --> 2 Cl₂ + 2 H₂O

Durch die Chloralkalielektrolyse wurde das Deacon-Verfahren jedoch stark in den Hintergrund gedrängt. Nahezu die gesamte Produktion von Chlor erfolgte durch Elektrolyse wässriger Kochsalzlösungen [Ullmann Encyclopedia of industrial chemistry, seventh release, 2006]. Die Attraktivität des Deacon-Verfahrens nimmt jedoch in jüngster Zeit wieder zu, da der weltweite Chlorbedarf stärker wächst als die Nachfrage nach Natronlauge. Dieser Entwicklung kommt das Verfahren zur Herstellung von Chlor durch Oxidation von Chlorwasserstoff entgegen, das von der Natronlaugenherstellung entkoppelt ist. Darüber hinaus fällt Chlorwasserstoff in großen Mengen beispielsweise bei Phosgenierungsreaktionen, etwa bei der Isocyanat-Herstellung, als Koppelprodukt an.

Die Deacon-Reaktion kann entweder bei hohen Temperaturen (>700°C) rein thermisch oder in Gegenwart von Katalysatoren bei einer Temperatur von 300 bis 450 °C durchgeführt werden. Die rein thermische Deacon-Reaktion wird für ein HCl-Recycling im technischen Maßstab nicht genutzt.

Die ersten Katalysatoren für die HCl-Gasphasenoxidation enthielten Kupfer in der oxidischen Form als Aktivkomponente und waren bereits durch Deacon in 1868 beschrieben worden. Diese Katalysatoren deaktivierten rasch, weil die Aktivkomponente sich unter den hohen Prozesstemperaturen verflüchtigte.

Auch die HCl-Gasphasenoxidation mittels Chromoxid-basierten Katalysatoren ist bekannt. Jedoch neigen Chrom-basierte Katalysatoren dazu unter oxidierenden Bedingungen Chrom(VI)Oxide auszubilden, die sehr giftig sind und technisch aufwendig von der Umgebung fern gehalten werden müssen. Darüber hinaus wird in anderen Veröffentlichungen eine kurze Laufzeit unterstellt (WO 2009/035234 A, Seite 4, Zeile 10).

Ruthenium-basierte Katalysatoren für die HCl-Gasphasenoxidation wurden zum ersten Mal 1965 beschrieben, jedoch war die Aktivität dieser RuCl₃/SiO₂-Katalysatoren recht gering (siehe: DE 1567788 A1). Weitere Katalysatoren mit den Aktivkomponenten Rutheniumdioxid, Mischoxiden des Rutheniums oder Rutheniumchlorid in Kombination mit verschiedenen Trägeroxiden, wie Titandioxid oder Zinndioxid wurden auch schon beschrieben (siehe z.B.: EP 743277A1, US-A-5908607, EP 2026905 A1 und EP 2027062 A2).

Die Deacon-Reaktion verläuft exotherm (Standardreaktionsenthalpie -57 kJ/mol Chlor) und reversibel. Bei der für technische Prozesse erforderlichen Reaktionstemperatur von ≥ 300°C liegt das Reaktionsgleichgewicht nicht mehr vollständig auf der Produktseite. Aus den bekannten thermodynamischen Daten der Reaktion folgt, dass z.B. bei 350 °C Reaktionstemperatur, 0,1 MPa Gasdruck und stöchiometrischen Eduktverhältnissen (HCl : O₂ = 4 : 1 Mole/Mol) ein maximaler HCl-Umsetzungsgrad von rund 85 % erreichbar ist. Ein höherer HCl-Umsatz ist nur durch einen Sauerstoffüberschuss erreichbar, jedoch um den Preis höherer Aufwendungen für die Aufbereitung der Reaktionsprodukte. Könnte man die Reaktionstemperatur auf 150 °C absenken, wäre ein Gleichgewichtsumsatz von bis zu 99 % möglich.

Um die Reaktionstemperaturen bis in den thermodynamisch günstigen Bereich (< 300°C) absenken zu können, wurden sogenannte nichtthermische Anregungsquellen untersucht. Derartige Verfahrensprinzipien sind beispielsweise in Stiller (W. Stiller: Nichtthermisch aktivierte Chemie. Birkheuser Verlag, Basel, Boston, 1987, S. 33-34, S. 45-49, S122-124, S. 138-145.) beschrieben. HCl-Oxidationsverfahren mit nichtthermischer Aktivierung sind in den Schriften JP 5 907 3405, RU A 2253 607, DD 88 309, SUA 180 1943, Cooper et al. (W. W. Cooper, H. S. Mickley, R. F. Baddour: Oxidation of hydrogen chloride in a microwave discharge. Ind. Eng. Chern. Fundam. 7(3), 400-409 (1968).), van Drumpt (J. D. van Drumpt: Oxidation of Hydrogen Chloride with Molecular Oxygen in a Silent Electrical Discharge. Ind. Eng. Chern. Fundam. 22(4), 594-595 (1972)) und DE 10 2006 022 761 AI beschrieben. Sie basieren überwiegend auf der photochemischen Aktivierung eines der beiden Reaktionspartner, HCl oder O₂.JP 59-73 405A beschreibt die Photooxidation von gasförmigem Chlorwasserstoff, wobei zur Anregung der Reaktanden gepulste Laserstrahlung oder eine Hochdruck-Quecksilberdampflampe oder auch eine Kombination der beiden genannten Photonenquellen eingesetzt wird.

In RU 2 253 607 wird ebenfalls ein photochemisches Verfahren zur Chlorherstellung beschrieben, bei dem ein HCl-Luft-Gemisch durch einen Rohrreaktor strömt und die Aktivierung der Reaktanden in einer Reaktionszone durch einen Quecksilberdampfstrahler erfolgt.

EP1914199 beschreibt ein Verfahren zur Chlorherstellung aus einem gasförmigen Chlorwasserstoff und Sauerstoff enthaltendem Gemisch unter Einwirkung von ultravioletter Strahlung, bei einer Wellenlänge im Bereich von 165 nm bis 270 nm bei einer Dichte der ultravioletten Strahlung von (10-40) *10 ⁻⁴ W/cm³ und einem Druck von nicht mehr als 0,1 MPa. Die Oxidation des Chlorwasserstoffs erfolgt durch den aktivierten Sauerstoff unter Bildung des Zielprodukts. Es werden fast quantitative Umsetzungsgrade behauptet, ohne dass es zu einer Erwärmung des Produktgemisches kommt. Es wird nicht genannt, welcher Energieaufwand für die Anregungsquellen (UV oder Elektronen) zur Erzielung der genannten Umsetzungsgrade notwendig ist. Weiterhin finden sich keine Angaben zur Verweilzeit der Reaktanden oder der Größe der eingesetzten Reaktionsapparate. Der Hauptreaktionsweg erfolgt gemäß der Anmeldung über angeregte (einzelne) Sauerstoffatome, Ozon wird nur als Nebenprodukt der Sauerstoff-Anregung genannt.

DD 88 309 A beschreibt eine katalysierte HCl-Oxidation bei 150° - 250°C, die zusätzlich durch den Einsatz von nicht näher definierter UV-Strahlung unterstützt wird.

In der Schrift DE 10200 602 276 A1 wird ein integriertes Verfahren zur Herstellung von Isocyanaten aus Phosgen und wenigstens einem Amin und Oxidation des dabei anfallenden Chlorwasserstoffs mit Sauerstoff zu Chlor, wobei das Chlor zur Herstellung des Phosgens rückgeführt wird, beschrieben. Die Schrift geht insbesondere aus von Verfahren zur Herstellung von Chlor durch nichtthermische aktivierte Umsetzung von Chlorwasserstoff mit Sauerstoff, bei denen aus dem bei der Umsetzung entstehenden Gasgemisch, bestehend wenigstens aus den Zielprodukten Chlor und Wasser, nicht umgesetztem Chlorwasserstoff und Sauerstoff sowie ggf. weiteren Nebenbestandteilen wie Kohlendioxid und Stickstoff Chlor entnommen und in die Phosgenherstellung rückgeführt wird.

Hauptnachteil der bisher beschriebenen nichtthermischen HCl-Oxidationsprozesse ist ihre unbefriedigende Energieeffizienz. In keinem Fall ist ein hinreichend hoher HCl-Umsetzungsgrad (> 90%) beschrieben worden, wie er mit der vorliegenden Erfindung angestrebt wird.

In der Schrift WO 2010 020 345 A1 wird ein Verfahren zur heterogen katalysierten Oxidation von Chlorwasserstoff mittels Sauerstoff enthaltender Gase beschrieben, dadurch gekennzeichnet, dass ein Gasgemisch bestehend mindestens aus Chlorwasserstoff und Sauerstoff einen geeigneten festen Katalysator durchströmt und gleichzeitig der Einwirkung eines nichtthermischen Plasmas ausgesetzt wird.

Jedoch wird auch hier ein hinreichend hoher HCl-Umsatzgrad von 90 % nur bei einer Temperatur von 350 °C erreicht. Bei 150 °C sank der HCl-Umsatzgrad sogar auf 63 % ab.

In der noch unveröffentlichten europäischen Patentanmeldung mit der Anmeldenummer 16169332.0 wird ein Verfahren zur heterogen photokatalysierten Oxidation von Chlorwasserstoff mittels einer UV-Strahlung, dadurch gekennzeichnet, dass ein Gasgemisch wenigstens aus Chlorwasserstoff, Sauerstoff und ggf. weiteren Nebenbestandteilen erzeugt und über einen festen Photo-Katalysator geleitet wird und die Reaktion auf der Oberfläche des Katalysators durch Einwirkung von UV-Strahlung in einem selektiven Energiebereich gestartet wird. Die Umsetzung von Kohlendioxid wird in dieser Schrift nicht erwähnt.

Aufgabe der vorliegenden Erfindung ist es daher, ein Verfahren zum Recycling von Chlorwasserstoff zu Chlor zur Verfügung zu stellen, welches einfach, sicher und energieeffizient betrieben werden kann und für die Oxidation des Chlorwasserstoffs Kohlenstoffdioxid als Oxidationsmittel nutzt.

Die oben dargestellte Aufgabe wird erfindungsgemäß durch eine heterogen photokatalysierte Oxidation von Chlorwasserstoff mit Kohlenstoffdioxid insbesondere bei niedriger Katalysatortemperatur gelöst.

Gegenstand der Erfindung ist ein Verfahren zur heterogen photokatalysierten Oxidation von Chlorwasserstoff mittels einer UV-Strahlung, dadurch gekennzeichnet, dass ein Gasgemisch wenigstens aus Chlorwasserstoff, Kohlenstoffdioxid und ggf. weiteren Nebenbestandteilen erzeugt und über einen festen Photo-Katalysator geleitet wird und die Reaktion auf der Oberfläche des Katalysators durch Einwirkung von UV-Strahlung in einem selektiven Energiebereich gestartet wird.

In einer bevorzugten Ausführung des neuen Verfahrens umfasst die UV Strahlung, die für die photokatalysierte Oxidation eingesetzt wird, einen Energiebereich von 3,2 bis 4 eV, bevorzugt von 3,26 bis 3,94 eV.

In einer besonders bevorzugten Ausführung des neuen Verfahrens wird die UV-Strahlung mittels UV-LED-Lampen erzeugt.

Der Photo-Katalysator weist bevorzugt mindestens ein photoaktives Material wie ein Übergangsmetall oder Übergangsmetalloxid oder ein Halbleitermaterial auf. Photoaktiv im Sinne der Erfindung ist ein Material das bei Bestrahlung mit UV-Strahlung die Reaktionsenergie für die Umwandlung von molekularem Kohlenstoffdioxid (CO₂) zu einer aktiven Sauerstoffspezies auf der Oberfläche des Katalysators erzeugt.

In einem bevorzugten Verfahren wird ein Photo-Katalysator eingesetzt, der als zusätzliche katalytische Aktivkomponente (hier auch als Co-Katalysator bezeichnet) Metalle oder Metallverbindungen aufweist, die auch in der thermokatalytischen HCl-Oxidation aktiv sind, z.B. Metalle der 1., 7. oder 8. Nebengruppe des Periodensystems der Elemente oder Metallverbindungen, insbesondere Oxide, Oxidchloride oder Chloride der Metalle der 1., 3., 6., 7. oder 8. Nebengruppe des Periodensystems der Elemente, oder Mischungen dieser Metalle oder Metallverbindungen. Besonders bevorzugt wird als Co-Katalysator mindestens eine Verbindung aus der Reihe: CuCl₂, FeCl₃, Cr₂O₃, Chromoxidchlorid, RuO₂, Rutheniumoxidchlorid, RuCl₂, CeO₂ und Ceroxidchlorid eingesetzt.

Ganz besonders bevorzugt wird als Co-Katalysator für die photokatalysierte Oxidation ein oder mehrere Katalysatoren ausgewählt aus der Reihe: Rutheniumoxid, Rutheniumchlorid und Rutheniumoxidchlorid eingesetzt.

Besonders bevorzugt weist der Photo-Katalysator mindestens ein photoaktives Material auf, bestehend aus einer oder mehreren Verbindungen ausgewählt aus der Reihe: AlCuO₂, AlₓGa_{y}In_{1-x-y}N, AlₓIn₁₋ₓN, AlN, B₆O, BaTiO₃, CdS, CeO₂, Fe₂O₃, GaN, Hg₂SO₄, InₓGa₁₋ₓN, In₂O₃, KTaO₃, LiMgN, NaTaO₃, Nb₂O₅, NiO, PbHfO₃, PbTiO₃, PbZrO₃, Sb₄Cl₂O₅, Sb₂O₃, SiC, SnO₂, SrCu₂O₂, SrTiO₃, TiO₂, WO₃, ZnO, ZnS, ZnSe, welches sich durch Bestrahlung mit UV-Licht aktivieren lässt.

Die Reaktionstemperatur der photokatalytischen HCl-Oxidation mit UV-Strahlung wird nach einem bevorzugten Verfahren in einem Bereich bis maximal 250°C bevorzugt von 20 bis 250°C, besonders bevorzugt von 20 bis 150°C eingestellt.

Vorteilhafterweise wird in einem besonders bevorzugten Verfahren die HCl-Oxidation bei erhöhtem Druck, insbesondere einem Druck von bis zu 25 bar, bevorzugt bis 10 bar durchgeführt. Dies erleichtert beispielsweise die Ankopplung an vorhergehende andere HCl-Oxidationsstufen, die bloße katalysierte Oxidationsreaktionen von Chlorwasserstoff mit Sauerstoff enthaltenden Gasen sind.

Eine mögliche Ausführungsform ist eine Erweiterung des neuen Verfahrens, dadurch gekennzeichnet, dass die photokatalytische HCl-Oxidation mit einem oder mehreren anderen Typen von HCl-Oxidationsreaktionen ausgewählt aus der Reihe: katalytische Gasphasenoxidation, thermische Gasphasenoxidation und Elektrolyse von HCl Gas, kombiniert und als weitere Stufe, der einen oder mehreren anderen HCl-Oxidationsreaktionen nachgeordnet durchgeführt wird.

Die andere HCl-Oxidationsreaktion ist bevorzugt eine thermokatalysierte Oxidationsreaktion von Chlorwasserstoff mit Sauerstoff enthaltenden Gasen (Deacon-Reaktion).

Eine mögliche bevorzugte Ausführungsform besteht aus einer Kombination einer katalysierten Deacon-Reaktion, die bei erhöhter Temperatur, insbesondere bei mindestens 300°C betrieben wird, mit einer nachgeschalteten photokatalytischen Oxidation bei niedriger Temperatur, insbesondere <300 °C.

Während die thermokatalytische HCl-Oxidation mit molekularem Sauerstoff (O₂) an den üblichen Deacon-Katalysatoren (CuCl₂, FeCl₃, Cr₂O₃, RuO₂, CeO₂, etc.) eine Reaktionstemperatur von typischerweise 300 °C und mehr erfordert, wurde überraschend gefunden, dass an einigen Katalysatoren mittels photokatalytischer HCl-Oxidation eine schnelle und glatte Oxidation von Chlorwasserstoff zu Chlor bereits bei viel niedrigerer Temperatur, besonders bevorzugt bei 20 bis 150 °C, möglich ist.

Es wurde gefunden, dass eine Vielzahl von heterogenen Katalysatoren, die insbesondere Metalle bzw. Metallverbindungen der 1., 3., 6., 7. und 8. Nebengruppe des Periodensystems enthalten, diese Reaktion unterstützen. Ein besonders bevorzugter Katalysator für die photokatalytische HCl-Oxidation besteht beispielsweise aus Rutheniumoxid auf Titandioxid als Träger. Dieser Katalysator kann identisch sein mit dem auch bei hohen Temperaturen wirksamen Deacon-Katalysator, der insbesondere für die eventuell vorgeschaltete andere thermokatalytische HCl-Oxidation verwendet wird.

Verschiedene Metalle und Metallverbindungen lassen sich durch UV-Licht anregen, um Reaktionen photochemisch zu katalysieren. Als Beispiel sei die photokatalytische Oxidation von CO an Titandioxid geträgerten Katalysatoren aufgeführt (doi:10.1016/S0926-3373(03)00162-0). Dabei wird das photoaktive Material durch Licht einer definierten Wellenlänge angeregt. In diesem angeregten Zustand kann das Material molekularen Sauerstoff (O₂) in eine aktive Sauerstoffspezies umwandeln, welche dann mit einem anderen Stoff reagieren kann, diesen also oxidiert.

Bei der erfindungsgemäßen photokatalysierten HCl-Oxidation wurde überraschend gefunden, dass sich ein üblicher Deacon-Katalysator (z.B. CuCl₂, FeCl₃, Cr₂O₃, RuO₂, CeO₂, etc. wie oben beschrieben) auf einem photoaktivem Material, wie einem Übergangsmetalloxid oder einem Halbleiter (AlCuO₂, AlₓGa_{y}In_{1-x-y}N, AlₓIn₁₋ₓN, AlN, B₆O, BaTiO₃, CdS, CeO₂, Fe₂O₃, GaN, Hg₂SO₄, InₓGa₁₋ₓN, In₂O₃, KTaO₃, LiMgN, NaTaO₃, Nb₂O₅, NiO, PbHfO₃, PbTiO₃, PbZrO₃, Sb₄Cl₂O₅, Sb₂O₃, SiC, SnO₂, SrCu₂O₂, SrTiO₃, TiO₂, WO₃, ZnO, ZnS, ZnSe) durch Bestrahlung mit UV-Licht aktivieren lässt, so dass die photokatalysierte HCl-Oxidation schon bei sehr niedriger Temperatur und bei hohen Umsatzgraden möglich ist.

Durch die neue photokatalysierte HCl-Oxidation bei niedrigen Reaktionstemperaturen kann das thermodynamische Gleichgewicht der HCl-Oxidationsreaktion weit auf die Seite der Reaktionsprodukte verschoben werden. Die bei hohem HCl-Umsetzungsgrad im Produktstrom verbleibenden geringen Mengen an Chlorwasserstoff erfordern keine aufwändige Rückgewinnung. Sie können durch eine einfache Wasserwäsche entfernt werden. Dies vereinfacht zusätzlich die Produktaufarbeitung und verbessert so die Wirtschaftlichkeit des Verfahrens.

Besonders bevorzugt wird die neue oben bereits beschriebene photokatalysierte HCl-Oxidation in Kombination mit der auch als Deacon-Prozess bekannten, thermokatalysierten Gasphasen-Reaktion mit molekularem Sauerstoff eingesetzt. Hierbei wird Chlorwasserstoff mit Sauerstoff in einer exothermen Gleichgewichtsreaktion an einem Katalysator zu Chlor oxidiert, wobei Wasserdampf als Nebenprodukt anfällt. Die Reaktionstemperatur beträgt üblicherweise 250 bis 500°C, der übliche Reaktionsdruck beträgt 1 bis 25 bar. Da es sich um eine Gleichgewichtsreaktion handelt, ist es zweckmäßig, bei möglichst niedrigen Temperaturen zu arbeiten, bei denen der Katalysator noch eine ausreichende Aktivität aufweist. Ferner ist es zweckmäßig, Sauerstoff in überstöchiometrischen Mengen zum Chlorwasserstoff einzusetzen. Üblich ist beispielsweise ein zwei- bis vierfacher Sauerstoff-Überschuss. Da keine Selektivitätsverluste zu befürchten sind, kann es wirtschaftlich vorteilhaft sein, bei relativ hohem Druck und dementsprechend bei gegenüber Normaldruck längerer Verweilzeit zu arbeiten.

Geeignete bevorzugte Katalysatoren für das Deacon-Verfahren umfassen Rutheniumoxid, Rutheniumchlorid oder andere Rutheniumverbindungen auf Siliziumdioxid, Aluminiumoxid, Titandioxid, Zinndioxid oder Zirkondioxid als Träger und Ceroxid, Cerchlorid oder andere Cerverbindungen auf Siliziumdioxid, Aluminiumoxid, Titandioxid, Zinndioxid, Zirkondioxid als Träger. Geeignete Katalysatoren können beispielsweise durch Aufbringen von Rutheniumchlorid auf den Träger und anschließendes Trocknen oder Trocknen und Kalcinieren erhalten werden. Geeignete Katalysatoren können ergänzend zu oder an Stelle einer Rutheniumverbindung auch Verbindungen anderer Edelmetalle, beispielsweise Gold, Palladium, Platin, Osmium, Iridium, Silber, Kupfer oder Rhenium enthalten. Geeignete Katalysatoren können ferner Chrom(III)oxid enthalten.

Die thermisch katalysierte Chlorwasserstoff-Oxidation kann adiabatisch oder bevorzugt isotherm oder annähernd isotherm, diskontinuierlich, bevorzugt aber kontinuierlich als Fließ- oder Festbettverfahren, bevorzugt als Festbettverfahren, besonders bevorzugt in Rohrbündelreaktoren an Heterogenkatalysatoren bei einer Reaktortemperatur von 180 bis 500°C, bevorzugt 200 bis 400°C, besonders bevorzugt 220 bis 350°C und einem Druck von 1 bis 25 bar (1000 bis 25000 hPa), bevorzugt 1,2 bis 20 bar, besonders bevorzugt 1,5 bis 17 bar und insbesondere 2,0 bis 15 bar durchgeführt werden.

Übliche Reaktionsapparate, in denen die katalysierte Chlorwasserstoff-Oxidation durchgeführt wird, sind Festbett- oder Wirbelbettreaktoren. Die katalysierte Chlorwasserstoff- Oxidation kann bevorzugt auch mehrstufig durchgeführt werden.

Bei der isothermen oder annähernd isothermen Fahrweise können auch mehrere, also 2 bis 10, bevorzugt 2 bis 6, besonders bevorzugt 2 bis 5, insbesondere 2 bis 3, in Reihe geschaltete Reaktoren mit zusätzlicher Zwischenkühlung eingesetzt werden. Der Chlorwasserstoff kann entweder vollständig zusammen mit dem Sauerstoff vor dem ersten Reaktor oder über die verschiedenen Reaktoren verteilt zugegeben werden. Diese Reihenschaltung einzelner Reaktoren kann auch in einem Apparat zusammengeführt werden.

Eine weitere bevorzugte Ausführungsform einer für das Verfahren geeigneten Vorrichtung besteht darin, dass man eine strukturierte Katalysatorschüttung einsetzt, bei der die Katalysatoraktivität in Strömungsrichtung ansteigt. Eine solche Strukturierung der Katalysatorschüttung kann durch unterschiedliche Tränkung der Katalysatorträger mit Aktivmasse oder durch unterschiedliche Verdünnung des Katalysators mit einem Inertmaterial erfolgen. Als Inertmaterial können beispielsweise Ringe, Zylinder oder Kugeln aus Titandioxid, Zirkondioxid oder deren Gemischen, Aluminiumoxid, Steatit, Keramik, Glas, Graphit oder Edelstahl eingesetzt werden. Beim bevorzugten Einsatz von Katalysatorformkörpern sollte das Inertmaterial bevorzugt ähnliche äußeren Abmessungen haben.

Als Katalysatorformkörper eignen sich Formkörper mit beliebigen Formen, bevorzugt sind Tabletten, Ringe, Zylinder, Sterne, Wagenräder oder Kugeln, besonders bevorzugt sind Ringe, Zylinder oder Sternstränge als Form.

Als Heterogenkatalysatoren eignen sich insbesondere Rutheniumverbindungen oder Kupferverbindungen auf Trägermaterialen, die auch dotiert sein können, bevorzugt sind gegebenenfalls dotierte Rutheniumkatalysatoren. Als Trägermaterialen eignen sich beispielsweise Siliziumdioxid, Graphit, Titandioxid mit Rutil- oder Anatas-Struktur, Zinndioxid, Zirkondioxid, Aluminiumoxid oder deren Gemische, bevorzugt Titandioxid, Zirkondioxid, Aluminiumoxid oder deren Gemische, besonders bevorzugt y- oder δ-Aluminiumoxid oder deren Gemische.

Die Kupfer- bzw. die Rutheniumträgerkatalysatoren können beispielsweise durch Tränkung des Trägermaterials mit wässrigen Lösungen von CuCl₂ bzw. RuCl₃ und gegebenenfalls eines Promotors zur Dotierung, bevorzugt in Form ihrer Chloride, erhalten werden. Die Formgebung des Katalysators kann nach oder bevorzugt vor der Tränkung des Trägermaterials erfolgen.

Zur Dotierung der Katalysatoren eignen sich als Promotoren Alkalimetalle wie Lithium, Natrium, Kalium, Rubidium und Cäsium, bevorzugt Lithium, Natrium und Kalium, besonders bevorzugt Kalium, Erdalkalimetalle wie Magnesium, Calcium, Strontium und Barium, bevorzugt Magnesium und Calcium, besonders bevorzugt Magnesium, Seltenerdmetalle wie Scandium, Yttrium, Lanthan, Cer, Praseodym und Neodym, bevorzugt Scandium, Yttrium, Lanthan und Cer, besonders bevorzugt Lanthan und Cer, oder deren Gemische.

Die Formkörper können anschließend bei einer Temperatur von 100 bis 400°C, bevorzugt 100 bis 300°C beispielsweise unter einer Stickstoff-, Argon- oder Luftatmosphäre getrocknet und gegebenenfalls kalziniert werden. Bevorzugt werden die Formkörper zunächst bei 100 bis 150°C getrocknet und anschließend bei 200 bis 400°C kalziniert.

Der Umsatz an Chlorwasserstoff im einfachen Durchgang kann bevorzugt auf 15 bis 90 %, bevorzugt 40 bis 85%, besonders bevorzugt 50 bis 70% begrenzt werden.

In einer besonders bevorzugten Variante des neuen Verfahrens wird zunächst der Hauptanteil der HCl-Oxidation insbesondere bis zu einem HCl-Umsatz von mindestens 70%, bevorzugt bis mindestens 80% in dem anderen katalysierten Oxidationsprozess durchgeführt wird, der der photokatalysierten HCl-Oxidation mit UV-Strahlung vorgeschaltet ist.

Das Volumenverhältnis von Chlorwasserstoff zu Sauerstoff am Reaktoreintritt beträgt bevorzugt 1:1 bis 20:1, bevorzugt 1:1 bis 8:1, besonders bevorzugt 1:1 bis 5:1.

Das mit dem neuen Verfahren hergestellte Chlor wird in Produktionsverfahren zur Herstellung von Polymeren wie Polyurethanen und PVC weiter verwendet, die als Nebenprodukt den Chlorwasserstoff für das neue Oxidationsverfahren liefern.

Die Erfindung wird nachfolgend durch die Beispiele, welche jedoch keine Beschränkung der Erfindung darstellen, näher erläutert.

### Beispiele

### Beispiel 1 (Erfindungsgemäß)

Ein Katalysator bestehend aus Rutheniumoxid geträgert auf Titandioxid wurde in einer Festbettschüttung in einem Ringspalt-Quarz-Photoreaktor (Ringspaltdurchmesser 7 mm) vorgelegt und bei Raumtemperatur mit einem Gasgemisch aus 0,25 L/h (Standardbedingungen STP) Chlorwasserstoff, 1 L/h (STP) Kohlenstoffdioxid und 10 L/h Stickstoff (STP) durchströmt. Der Quarz-Photoreaktor wurde von außen mit einem 5 m UV-LED-Lichtband (12W/meter) mit UV-Licht der Wellenlänge 365 nm bestrahlt. Nach 1 h wurde der Produktgasstrom für 15 min in 30 Gew.-%-ige Kaliumiodidlösung geleitet. Das entstandene Iod wurde anschließend mit 0,1 N Thiosulfat-Maßlösung zurücktitriert, um die eingeleitete Chlormenge festzustellen. Es wurde ein Chlorwasserstoffumsatz von 33,6 % gemessen.

### Beispiel 2 (Vergleichsbeispiel)

Ein Katalysator bestehend aus Rutheniumoxid geträgert auf Titandioxid wurde in einer Festbettschüttung in einem Ringspalt-Quarz-Photoreaktor (Ringspaltdurchmesser 7 mm) vorgelegt und bei Raumtemperatur mit einem Gasgemisch aus 0,25 L/h (Standardbedingungen STP) Chlorwasserstoff, 1 L/h (STP) Kohlenstoffdioxid und 10 L/h Stickstoff (STP) durchströmt. Es wurde kein UV-Licht in den Reaktor eingestrahlt. Nach 2 h wurde der Produktgasstrom für 30 min in 30 Gew.-%-ige Kaliumiodidlösung geleitet. Das entstandene Iod wurde anschließend mit 0,1 N Thiosulfat-Maßlösung zurücktitriert, um die eingeleitete Chlormenge festzustellen. Es wurde ein Chlorwasserstoffumsatz von 0,0 % gemessen.

### Beispiel 3 (Vergleichsbeispiel)

Ein Titandioxid (DMS2005-0260) wurde in einer Festbettschüttung in einem Ringspalt-Quarz-Photoreaktor (Ringspaltdurchmesser 7 mm) vorgelegt und bei Raumtemperatur mit einem Gasgemisch aus 0,25 L/h (Standardbedingungen STP) Chlorwasserstoff, 1 L/h (STP) Kohlenstoffdioxid und 10 L/h Stickstoff (STP) durchströmt. Der Quarz-Photoreaktor wurde von außen mit einem 5 m UV-LED-Lichtband (12W/meter) mit UV-Licht der Wellenlänge 365 nm bestrahlt. Nach 2 h wurde der Produktgasstrom für 30 min in 30 Gew.-%-ige Kaliumiodidlösung geleitet. Das entstandene Iod wurde anschließend mit 0,1 N Thiosulfat-Maßlösung zurücktitriert, um die eingeleitete Chlormenge festzustellen. Es wurde ein Chlorwasserstoffumsatz von 0,0 % gemessen.

## Patentansprüche

1. Verfahren zur heterogen photokatalysierten Oxidation von Chlorwasserstoff mittels einer UV-Strahlung, **dadurch gekennzeichnet, dass** ein Gasgemisch wenigstens aus Chlorwasserstoff, Kohlenstoffdioxid und ggf. weiteren Nebenbestandteilen erzeugt und über einen festen Photo-Katalysator geleitet wird und die Reaktion auf der Oberfläche des Katalysators durch Einwirkung von UV-Strahlung in einem selektiven Energiebereich gestartet wird.

2. Verfahren nach Anspruch 1, **dadurch gekennzeichnet, dass** der Photo-Katalysator mindestens ein photoaktives Material wie ein Übergangsmetall oder Übergangsmetalloxid oder ein Halbleitermaterial aufweist.

3. Verfahren nach Anspruch 2, **dadurch gekennzeichnet, dass** der Photo-Katalysator als zusätzliche katalytische Aktivkomponente (Co-Katalysator) Metalle der 1., 7. oder 8. Nebengruppe des Periodensystems der Elemente oder Metallverbindungen, insbesondere Oxide, Oxidchloride oder Chloride der Metalle der 1., 3., 6., 7. oder 8. Nebengruppe, oder Mischungen dieser Metalle oder Metallverbindungen aufweist, bevorzugt mindestens eine Verbindung aus der Reihe: CuCl₂, FeCl₃, Cr₂O₃, Chromoxidchlorid, RuO₂, Rutheniumoxidchlorid, RuCl₂, CeO₂ und Ceroxidchlorid.

4. Verfahren nach einem der Ansprüche 2 bis 3, **dadurch gekennzeichnet, dass** der Photokatalysator als photoaktives Material eine oder mehrere Verbindungen ausgewählt aus der Reihe: AlCuO₂, AlₓGa_{y}In_{1-x-y}N, AlₓIn₁₋ₓN, AlN, B₆O, BaTiO₃, CdS, CeO₂, Fe₂O₃, GaN, Hg₂SO₄, InₓGa₁₋ₓN, In₂O₃, KTaO₃, LiMgN, NaTaO₃, Nb₂O₅, NiO, PbHfO₃, PbTiO₃, PbZrO₃, Sb₄Cl₂O₅, Sb₂O₃, SiC, SnO₂, SrCu₂O₂, SrTiO₃, TiO₂, WO₃, ZnO, ZnS, ZnSe, bevorzugt CeO₂, SnO₂ oder TiO₂ enthält.

5. Verfahren nach einem der Ansprüche 1 bis 4, **dadurch gekennzeichnet, dass** die photokatalytische HCl-Oxidation mit UV-Strahlung bei erhöhtem Druck, insbesondere einem Druck von bis zu 25 bar, bevorzugt bis 10 bar durchgeführt wird.

6. Verfahren nach einem der Ansprüche 1 bis 5, **dadurch gekennzeichnet, dass** die Reaktionstemperatur der photokatalytischen HCl-Oxidation mit UV-Strahlung maximal 250°C beträgt, bevorzugt von 20 bis 250°C, besonders bevorzugt 20 bis 150°C.

7. Verfahren nach einem der Ansprüche 1 bis 6, **dadurch gekennzeichnet, dass** die photokatalytische HCl-Oxidation mit einem oder mehreren anderen Typen von HCl-Oxidationsreaktionen ausgewählt aus der Reihe: katalytische Gasphasenoxidation, thermische Gasphasenoxidation und Elektrolyse von HCl Gas, kombiniert und als weitere Stufe der einen oder mehreren anderen HCl-Oxidationsreaktionen nachgeordnet durchgeführt wird.

8. Verfahren nach Anspruch 7, **dadurch gekennzeichnet, dass** als andere HCl-Oxidationsreaktion die katalysierte Oxidationsreaktion von Chlorwasserstoff mit Sauerstoff enthaltenden Gasen angewendet wird.

9. Verfahren nach einem der Ansprüche 7 oder 8, **dadurch gekennzeichnet, dass** zunächst der Hauptanteil der HCl-Oxidation insbesondere bis zu einem HCl-Umsatz von mindestens 70%, bevorzugt bis mindestens 80% in dem anderen katalysierten Oxidationsprozess durchgeführt wird, der der photokatalysierten HCl-Oxidation mit UV-Strahlung vorgeschaltet ist.

10. Verfahren nach einem der Ansprüche 1 bis 9, **dadurch gekennzeichnet, dass** die UV Strahlung für die photokatalysierte Oxidation einen Energiebereich von 3,2 bis 4 eV, bevorzugt von 3,26 bis 3,94 eV, umfasst.

11. Verfahren nach einem der Ansprüche 1 bis 10, **dadurch gekennzeichnet, dass** als Co-Katalysator für die photokatalysierte Oxidation ein oder mehrere Katalysatoren ausgewählt aus der Reihe: Rutheniumoxid, Rutheniumchlorid und Rutheniumoxidchlorid eingesetzt wird.

12. Verfahren nach einem der Ansprüche 1 bis 11, **dadurch gekennzeichnet, dass** als UV-Lichtquelle für die UV-Strahlung eine UV-LED-Lampe verwendet wird.
